# EUROPEAN PATENT APPLICATION

(11) **EP 2 261 579 A1**
(43) Date of publication of application: **15.12.2010**
(21) Application number: 09722530.4
(22) Date of filing: 04.03.2009
(51) Int. Cl.: F25B 1/00, F04C 18/32, F04C 23/00, F04C 29/00, F04C 29/04, F25B 31/02

(54) **FREEZING DEVICE**

(30) Priority: 18.03.2008 JP 2008069286
(71) Applicant: Daikin Industries, Ltd., Osaka 530-8323 (JP)
(72) Inventor: MORIMOTO, Kouki, Sakai-shi Osaka 592-8331 (JP); YANAGISAWA, Masanori, Kusatsu-shi Shiga 525-8526 (JP); FURUSHO, Kazuhiro, Sakai-shi Osaka 591-8511 (JP)
(74) Representative: HOFFMANN EITLE
(86) International application number: PCT/JP2009/000975
(87) International publication number: WO 2009/116237

(57) **Abstract**

In a refrigeration apparatus (1) for which refrigerant containing a compound represented by a molecular formula of C₃HₘFₙ (note that m = 1-5, n = 1-5, and m + n = 6) is used, a compressor including a first compression mechanism (20A) and a second compression mechanism (20B) inside a casing (11) is used in order to reduce or prevent decomposition of refrigerant due to an increase in discharge temperature of a compressor (10) performing a compression phase of refrigerant in a refrigeration cycle.

## Description

### TECHNICAL FIELD

The present invention relates to a refrigeration apparatus, and particularly relates to a refrigeration apparatus for which refrigerant containing a compound represented by a molecular formula of C₃HₘFₙ is used.

### BACKGROUND ART

Conventionally, a refrigeration apparatus including a refrigerant circuit in which a refrigeration cycle is performed has been broadly applied to an air conditioning system etc. Patent Document 1 discloses that refrigerant containing a compound represented by a molecular formula of C₃HₘFₙ is used as refrigerant of a refrigerant circuit. Such refrigerant has excellent properties as the refrigerant of the refrigerant circuit, and attempts have been made to improve a coefficient of performance (COP) of a refrigeration apparatus. In addition, it has been known that such refrigerant does not contain chlorine and bromine atoms, and has a small influence on destruction of the ozone layer.

The refrigerant (C₃HₘFₙ) disclosed in Patent Document 1 has properties such as a relatively-high theoretical COP and low global warming potential (GWP). Thus, use of the refrigerant for the refrigeration cycle can provide an environment-friendly refrigeration apparatus having high operational efficiency.

### CITATION LIST

### PATENT DOCUMENT

### SUMMARY OF THE INVENTION

### TECHNICAL PROBLEM

However, the refrigerant are likely to be decomposed at high temperature, and therefore the refrigerant is desirably used under a condition where an increase in temperature is not likely to be caused. When using, e.g., a conventional single-stage single-cylinder compressor, if a cylinder volume or a compression ratio is increased, then a discharge flow rate is increased in response to an increase in so-called "over-compression" of refrigerant, and a refrigerant temperature tends to increase. Thus, there is a possibility that, when using the refrigerant in combination with the single-stage single-cylinder compressor, refrigerant is decomposed depending on conditions.

The present invention has been made in view of the foregoing, and it is an object of the present invention to reduce or prevent decomposition of refrigerant due to an increase in discharge temperature of a compressor in a refrigeration apparatus for which refrigerant containing a compound represented by a molecular formula of C₃HₘFₙ is used.

### SOLUTION TO THE PROBLEM

A first aspect of the invention is intended for a refrigeration apparatus in which refrigerant of a refrigerant circuit (2) is single component refrigerant containing refrigerant represented by a molecular formula: C₃HₘFₙ (note that "m" and "n" are integers equal to or greater than 1 and equal to or less than 5, and a relationship represented by an expression m + n = 6 is satisfied) and having a single double bond in a molecular structure, or refrigerant mixture containing the refrigerant.

The refrigeration apparatus includes a compressor (10) for performing a compression phase of refrigerant, and the compressor (10) includes a first compression mechanism (20A) and a second compression mechanism (20B) inside a casing (11).

In the first aspect of the invention, a so-called "two-cylinder" or "two-stage" compressor (10) can be used. However, if the two-cylinder compressor (10) is used, a discharge flow rate of each cylinder can be decreased as compared to that of a single-cylinder compressor (10), thereby reducing over-compression. Thus, for refrigerant which is likely to be decomposed at high temperature, an increase in refrigerant temperature can be reduced.

A second aspect of the invention specifies the configuration of the compressor (10) in the first aspect of the invention as a two-stage compressor. Specifically, the second aspect of the invention is intended for the refrigeration apparatus of the first aspect of the invention, in which the first compression mechanism (20A) of the compressor (10) is a lower-stage compression mechanism (20L), and the second compression mechanism (20B) is a higher-stage compression mechanism (20H); and both of the compression mechanisms (20A, 20B) serve as a two-stage compression mechanism (20L, 20H) for compressing refrigerant at two stages.

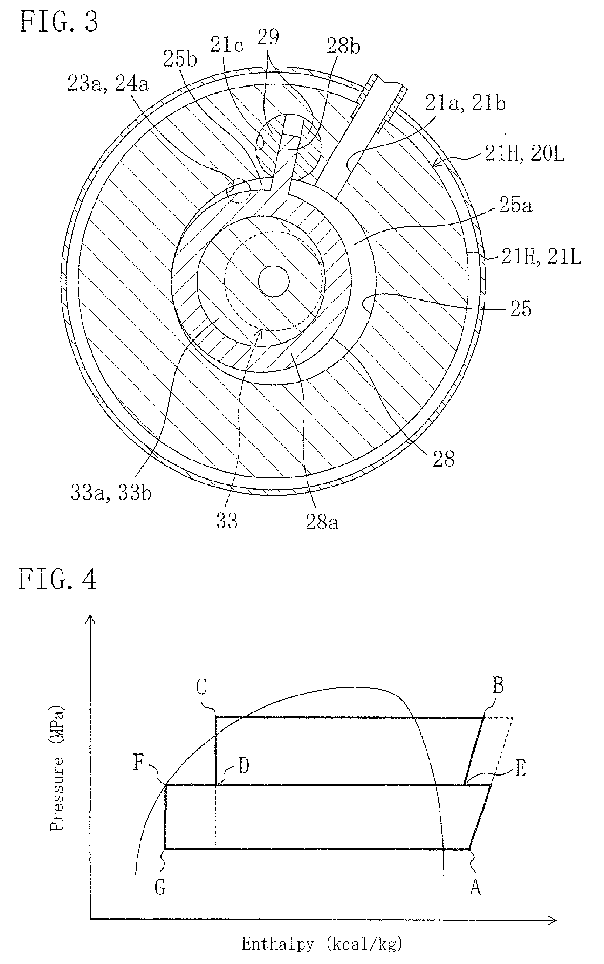

In the second aspect of the invention, as will be seen from a Mollier diagram of FIG. 4, refrigerant is compressed at two stages to reduce the over-compression of refrigerant on a higher-stage side as compared to a single-stage compression, thereby decreasing a discharge temperature. Thus, an increase in refrigerant temperature can be reduced.

A third aspect of the invention is intended for the refrigeration apparatus of the first or second aspect of the invention, in which the compression mechanism (20A, 20B) is a swing piston type compression mechanism which includes a cylinder (21L, 21H) having a cylinder chamber (25), and a swing piston (28) orbiting along an inner circumferential surface of the cylinder (21L, 21H); in which a blade (28b) outwardly protruding in a radial direction is formed in the swing piston (28); and in which support members (29) for holding the blade (28b) back and forth are rotatably held by the cylinder (21L, 21H).

In the third aspect of the invention, the compression mechanisms (20A, 20B) are the swing piston type compression mechanisms. A rolling piston type compressor (10) includes a cylinder having a cylinder chamber; and a rolling piston orbiting along an inner circumferential surface of the cylinder. The cylinder holds a blade, one end (tip end) of which is pressed against, and is brought contact with, an outer circumferential surface of the rolling piston. In such a rolling piston type compressor, the outer circumferential surface of the rolling piston and the tip end surface of the blade slide against each other to generate heat, and therefore an inside of the compressor is likely to have a high temperature. Thus, there is a possibility that, if the refrigerant is used, the refrigerant is decomposed. However, in the third aspect of the invention, since the swing piston type compressor (10) is used considering refrigerant which is likely to be decomposed at high temperature, the swing piston (28) and the blade (28b) do not slide against each other, thereby not generating heat in such a section. Thus, refrigerant is less susceptible to heat.

A fourth aspect of the invention is intended for the refrigeration apparatus of any one of the first to third aspects of the invention, in which the refrigerant represented by the molecular formula: C₃HₘFₙ (note that "m" and "n" are the integers equal to or greater than 1 and equal to or less than 5, and the relationship represented by the expression m + n = 6 is satisfied) and having the single double bond in the molecular structure is 2, 3, 3, 3-tetrafluoro-1-propene.

A fifth aspect of the invention is intended for the refrigeration apparatus of any one of the first to fourth aspects of the invention, in which the refrigerant of the refrigerant circuit (2) is refrigerant mixture further containing difluoromethane.

A sixth aspect of the invention is intended for the refrigeration apparatus of any one of the first to fifth aspects of the invention, in which the refrigerant of the refrigerant circuit (2) is refrigerant mixture further containing pentafluoroethane.

In the fourth to sixth aspects of the invention, the compressor (10) including the two compression mechanisms (20A, 20B) is used considering refrigerant which is likely to be decomposed at high temperature as in the first aspect of the invention, and therefore refrigerant is less susceptible to heat.

### ADVANTAGES OF THE INVENTION

According to the first aspect of the invention, the so-called "two-cylinder" or "two-stage" compressor (10) can be used. The two-cylinder compressor of such compressors, the over-compression of refrigerant of each cylinder is reduced as compared to the single-cylinder compressor (10), thereby decreasing the discharge flow rate. Thus, the increase in refrigerant temperature can be reduced, thereby reducing or preventing the decomposition of refrigerant.

According to the second aspect of the invention, refrigerant is compressed at the two stages, thereby decreasing the discharge temperature as compared to that of the single-stage compression. Thus, the decomposition of refrigerant can be reduced or prevented as in the first aspect of the invention.

According to the third aspect of the invention, the compression mechanisms (20A, 20B) are the swing piston type compression mechanisms, thereby easily reducing the increase in refrigerant temperature. Thus, combined with the use of the two compression mechanisms (20A, 20B), the decomposition of refrigerant can be more effectively reduced or prevented.

According to the fourth to sixth aspects of the invention, the compressor (10) temperature. Thus, the decomposition of refrigerant can be reduced.

### BRIEF DESCRIPTION OF THE DRAWINGS

[FIG. 1] FIG. 1 is a refrigerant circuit diagram of a refrigeration apparatus of a first embodiment of the present invention.
[FIG. 2] FIG. 2 is a longitudinal sectional view of a compressor.
[FIG. 3] FIG. 3 is a cross sectional view of a compression mechanism.
[FIG. 4] FIG. 4 is a Mollier diagram showing a change in refrigerant properties in the refrigerant circuit.
[FIG. 5] FIG. 5 is a longitudinal sectional view of a compressor of a second embodiment.

### DESCRIPTION OF REFERENCE CHARACTERS

- 1: Refrigeration Apparatus
- 2: Refrigerant Circuit
- 10: Compressor
- 11: Casing
- 20A: First Compression Mechanism
- 20B: Second Compression Mechanism
- 21L: Cylinder
- 21H: Cylinder
- 20L: Lower-Stage Compression Mechanism
- 20H: Higher-Stage Compression Mechanism
- 25: Cylinder Chamber
- 28: Swing Piston
- 28b: Blade
- 29: Swing Bush (Support Member)

### DESCRIPTION OF EMBODIMENTS

Embodiments of the present invention will be described in detail hereinafter with reference to the drawings.

### <<First Embodiment of the Invention>>

A first embodiment of the present invention will be described. The first embodiment relates to an air conditioning system.

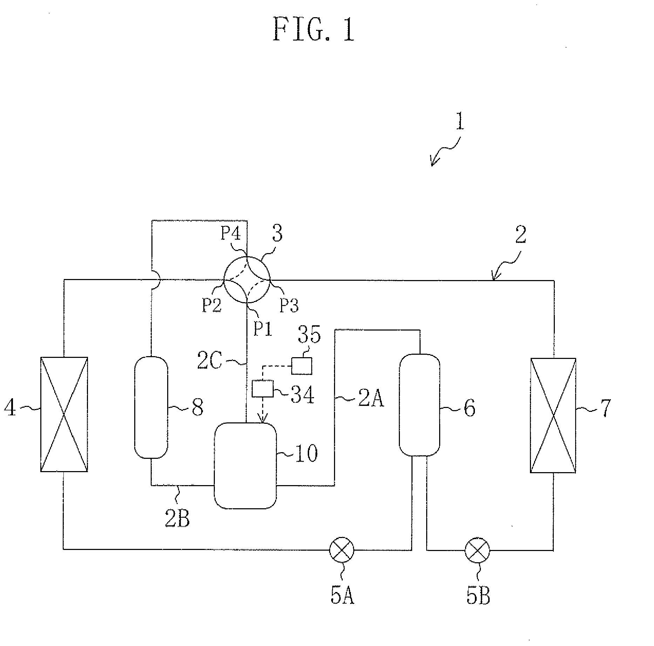

As illustrated in FIG. 1, an air conditioning system (1) is a heat pump type air conditioning system, and is switchable between a cooling operation and a heating operation.

A refrigerant circuit (2) of the air conditioning system (1) includes a compressor (10) for performing a compression phase of refrigerant in a refrigeration cycle; a four-way switching valve (3) which is a flow direction switching mechanism for switching a flow direction of refrigerant; an outdoor heat exchanger (4) which is a heat-source-side heat exchanger; a first expansion valve (5A) which is a first expansion mechanism; a gas-liquid separator (6); a second expansion valve (5B) which is a second expansion mechanism; an indoor heat exchanger (7) which is a utilization-side heat exchanger; and an accumulator (8). The refrigerant circuit (2) is formed as a closed circuit by connecting such components with pipes.

The refrigerant circuit (2) of the present embodiment is filled with single component refrigerant containing HFO-1234yf (2, 3, 3, 3-tetrafluoro-1-propene) as refrigerant. Note that a chemical formula of the HFO-1234yf is represented by an expression CF₃ - CF = CH₂. That is, such refrigerant is a type of single component refrigerant containing refrigerant represented by a molecular formula of C₃HₘFₙ (note that "m" and "n" are integers equal to or greater than 1 and equal to or less than 5, and a relationship represented by an expression m + n = 6 is satisfied) and having a single double bond in a molecular structure.

A discharge port of the compressor (10) is connected to a first port (P1) of the four-way switching valve (3), and a second port (P2) of the four-way switching valve (3) is connected to a gas-side end of the outdoor heat exchanger (4). A liquid-side end of the outdoor heat exchanger (4) is connected to a liquid-side end of the indoor heat exchanger (7) through the first expansion valve (5A), the gas-liquid separator (6), and the second expansion valve (5B). A gas-side end of the indoor heat exchanger (7) is connected to a third port (P3) of the four-way switching valve (3), and a fourth port (P4) of the four-way switching valve (3) is connected to a suction port of the compressor (10) through the accumulator (8).

The four-way switching valve (3) is switchable between a first state during the cooling operation, in which the first port (P1) communicates with the second port (P2), and the third port (P3) communicates with the fourth port (P4) (state indicated by a solid line in FIG. 1); and a second state during the heating operation, in which the first port (P1) communicates with the third port (P3), and the second port (P2) communicates with the fourth port (P4) (state indicated by a dashed line in FIG. 1).

An injection pipe (2A) is provided in the refrigerant circuit (2). The injection pipe (2A) is an injection pipe for injecting intermediate-pressure gaseous refrigerant which is intermediate-pressure fluid, to the compressor (10). One end of the injection pipe (2A) communicates with the gas-liquid separator (6), and the other end communicates with the compressor (10). In the gas-liquid separator (6), intermediate-pressure refrigerant is stored, which has intermediate pressure between condensing pressure of refrigerant which is high-pressure fluid, and evaporating pressure of refrigerant which is low-pressure fluid. The injection pipe (2A) is used for injecting intermediate-pressure gas-phase refrigerant of the intermediate-pressure refrigerant stored in the gas-liquid separator (6), to the compressor (10).

The first expansion valve (5A) and the second expansion valve (5B) are motorized valves with adjustable opening. Intermediate-pressure refrigerant made by reducing its pressure by the first expansion valve (5A) or the second expansion valve (5B) is stored in the gas-liquid separator (6).

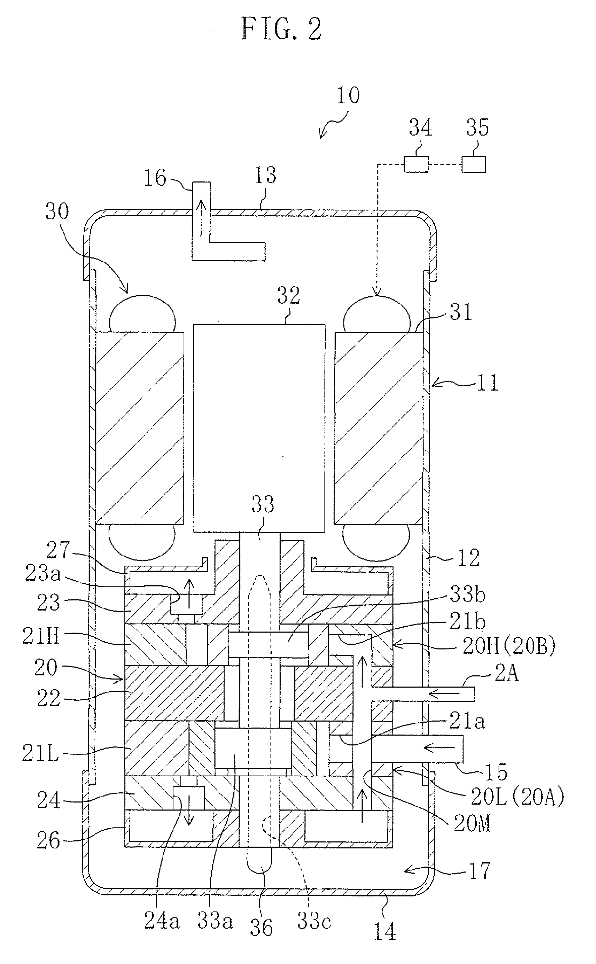

The compressor (10) controls an operational capacity in a single-step or multiple-step manner. To this end, as illustrated in FIG. 2, an electric motor (30) for driving a compression mechanism (20) is accommodated in the compressor (10). The electric motor (30) is connected to a power source (35) through an inverter (rotational speed control mechanism) (34), and a drive frequency is changed to adjust the rotational speed.

The compressor (10) is a two-stage compressor. As illustrated in FIG. 2, a lower-stage compression mechanism (20L) which is a first compression mechanism (20A); a higher-stage compression mechanism (20H) which is a second compression mechanism (20B); and the electric motor (30) for driving both of the compression mechanisms (20L, 20H) are accommodated in a hermetic casing (11). The casing (11) includes a cylindrical body section (12) having upper and lower openings; and end plate sections (13, 14) fixed to upper and lower end sections of the body section (12) by welding.

The electric motor (30) includes a stator (31) fixed to an inner circumferential surface of the casing (11); and a rotor (32) arranged in a center section of the stator (31). A drive shaft (33) is connected to a center section of the rotor (32). The drive shaft (33) downwardly extends from the rotor (32), and is connected to the lower-stage compression mechanism (20L) and the higher-stage compression mechanism (20H).

A bottom section inside the casing (11) serves as an oil storage section (17) of lubricant, and a lower end section of the drive shaft (33) is dipped in the lubricant of the oil storage section (17). A centrifugal oil pump (36) is provided in the lower end section of the drive shaft (33), and the lubricant is supplied to sliding sections and bearing sections of the lower-stage compression mechanism (20L) and the higher-stage compression mechanism (20H) through an oil supply path (33c) inside the drive shaft (33).

The lower-stage compression mechanism (20L) and the higher-stage compression mechanism (20H) are positioned below the electric motor (30), and are stacked in two tiers. Both of the lower-stage compression mechanism (20L) and the higher-stage compression mechanism (20H) are so-called "swing piston type" compression mechanisms.

The lower-stage compression mechanism (20L) and the higher-stage compression mechanism (20H) have approximately the same configuration, and the higher-stage compression mechanism (20H) is arranged above the lower-stage compression mechanism (20L). As illustrated in FIG. 3, in the compression mechanism (20L, 20H), a swing piston (28) is accommodated in a cylinder chamber (25) formed in a cylinder (21H, 21L). As illustrated in FIG. 2, a middle plate (22) is provided between the cylinders (21H, 21L) of the compression mechanisms (20L, 20H). A lower plate (rear head) (24) is provided on a lower surface of the lower-stage cylinder (21L) to close the lower-stage cylinder (21L), and an upper plate (front head) (23) is provided on an upper surface of the higher-stage cylinder (21H) to close the higher-stage cylinder (21H).

The whole of the swing piston (28) of the compression mechanism (20L, 20H) is formed in an annular form, and an eccentric section (33a, 33b) of the drive shaft (33) is rotatably fitted into the swing piston (28). The eccentric section (33a, 33b) is formed so as to be eccentric to the center of rotation of the drive shaft (33).

A suction path (21a, 21b) is formed in the cylinder (21H, 2 1 L), and one end of the suction path (21 a, 21b) opens to the cylinder chamber (25) to serve as a suction port. A discharge path (24a) of the lower-stage compression mechanism (20L) is formed in the lower plate (24), whereas a discharge path (23a) of the higher-stage compression mechanism (20H) is formed in the upper plate (23). One end of the discharge path (23a, 24a) opens to the cylinder chamber (25) to serve as a discharge port. Although not shown in the figure, a discharge valve for opening the discharge port when reaching a predetermined discharge pressure is provided in the discharge path (23a, 24a).

In the cylinder (21H, 21L), a cylindrical bush hole (21c) which extends in an axial direction, and which is positioned between the suction port and the discharge port is formed so as to open to the cylinder chamber (25). In the swing piston (28), an annular body section (28a) is integrally formed with a blade (28b) protruding from the body section (28a) in a radial direction. A tip end side of the blade (28b) is inserted into the bush hole (21c) through swing bushes (29) which is a pair of support members.

The blade (28b) divides the cylinder chamber (25) into a low-pressure chamber (25a) communicating with the suction path (21a, 21b), and a high-pressure chamber (25b) communicating with the discharge path (23a, 24a). The swing piston (28) compresses refrigerant by orbiting the body section (28a) along an inner circumferential surface of the cylinder chamber (25) while swinging the blade (28b) about the swing bushes (29) as a pivot point.

A suction pipe (15) for supplying low-pressure gaseous refrigerant to the lower-stage compression mechanism (20L) is connected to the suction path (21a) of the lower-stage compression mechanism (20L). A suction-side refrigerant pipe (2B) (see FIG. 1) of the refrigerant circuit (2) is connected to the suction pipe (15).

A lower muffler (26) is provided in the lower plate (24). A middle path (20M) is formed in the compression mechanism (20). The middle path (20M) penetrates the middle plate (22) through the lower plate (24) and the lower-stage cylinder (2 1 L), and communicates with the suction path (21b) of the higher-stage compression mechanism (20H).

The injection pipe (2A) is connected to the middle plate (22) to communicate with the middle path (20M). That is, the middle path (20M) is configured to be in an intermediate-pressure atmosphere by supplying intermediate-pressure gaseous refrigerant thereto. Such configuration supplies intermediate-pressure refrigerant to the higher-stage compression mechanism (20H).

An upper muffler (27) covering the discharge path (23a) of the higher-stage compression mechanism (20H) is provided in the upper plate (23). The discharge path (23a) of the higher-stage compression mechanism (20H) opens to the casing (11) through the upper muffler (27), and is configured such that an inside of the casing (11) is in a high-pressure atmosphere.

A discharge pipe (16) for discharging high-pressure gaseous refrigerant to the refrigerant circuit (2) is fixed to an upper section of the casing (11). A discharge-side refrigerant pipe (2C) of the refrigerant circuit (2) is connected to the discharge pipe (16) (see FIG. 1).

### Operation

Next, an air conditioning operation of the air conditioning system (1) will be described.

First, in the room cooling operation, the four-way switching valve (3) is switched to the state indicated by the solid line in FIG. 1. Refrigerant discharged from the compressor (10) is condensed by exchanging heat with outdoor air in the outdoor heat exchanger (4). The pressure of the liquid refrigerant is reduced by the first expansion valve (5A), and then such refrigerant is stored in the gas-liquid separator (6) as intermediate-pressure refrigerant having intermediate pressure between the condensing pressure and the evaporating pressure.

The pressure of intermediate-pressure liquid refrigerant of the intermediate-pressure refrigerant in the gas-liquid separator (6) is reduced by the second expansion valve (5B). Subsequently, such refrigerant is evaporated by exchanging heat with room air in the indoor heat exchanger (7), thereby cooling the room air. Then, the gaseous refrigerant returns to the compressor (10) through the accumulator (8), thereby performing a refrigeration circulating operation.

On the other hand, in the heating operation, the four-way switching valve (3) is switched to the state indicated by the dashed line in FIG. 1. Refrigerant discharged from the compressor (10) exchanges heat with room air in the indoor heat exchanger (7), and then is condensed while heating the room air. Subsequently, the pressure of the liquid refrigerant is reduced by the second expansion valve (5B), and such refrigerant is stored in the gas-liquid separator (6) as intermediate-pressure refrigerant.

The pressure of intermediate-pressure liquid refrigerant of the intermediate-pressure refrigerant in the gas-liquid separator (6) is reduced by the first expansion valve (5A), and then such refrigerant is evaporated by exchanging heat with outdoor air in the outdoor heat exchanger (4). Subsequently, the gaseous refrigerant returns to the compressor (10) through the accumulator (8), thereby performing the refrigerant circulating operation.

Since the injection pipe (2A) is provided, intermediate-pressure gaseous refrigerant in the gas-liquid separator (6) is injected to the compressor (10) in the air conditioning operation.

A change in refrigerant properties in the refrigerant circuit (2) will be described with reference to FIG. 4.

First, refrigerant in the compressor (10) is compressed so as to transition from a low-pressure state at a point A to a high-condensing-pressure state at a point B through the injection of intermediate-pressure refrigerant. The high-pressure gaseous refrigerant is condensed in the outdoor heat exchanger (4) or the indoor heat exchanger (7), and then changes into high-pressure liquid refrigerant at a point C. The pressure of the high-pressure liquid refrigerant is reduced to a point D by the first expansion valve (5A) or the second expansion valve (5B), thereby changing into intermediate-pressure refrigerant. The intermediate-pressure refrigerant is stored in the gas-liquid separator (6), and is separated into intermediate-pressure liquid refrigerant and intermediate-pressure gaseous refrigerant in the gas-liquid separator (6).

The separated intermediate-pressure gaseous refrigerant is injected into the compressor (10) through the injection pipe (2A) at a point E (refrigerant at the point D has a lower temperature than that of gaseous refrigerant discharged from the lower-stage compression mechanism (20L), and both of them are mixed together to start a second stage of the compression at the point E). Meanwhile, the pressure of the intermediate-pressure liquid refrigerant is reduced from a point F to a point G by the second expansion valve (5B) or the first expansion valve (5A), and thus, the refrigerant becomes low-pressure two-phase refrigerant. The low-pressure two-phase refrigerant is evaporated in the indoor heat exchanger (7) or the outdoor heat exchanger (4). Subsequently, such refrigerant transitions to the state at the point A, and then returns to the compressor (10).

Consequently, in the heating operation, intermediate-pressure gaseous refrigerant is added to refrigerant flowing in the indoor heat exchanger (7) serving as a condenser, thereby increasing an amount of circulating refrigerant. Thus, heating capability is improved.

On the other hand, in the cooling operation, the low-pressure two-phase refrigerant at the point G has an enthalpy difference increasing from the point D to the point F, thereby increasing a heat amount of refrigerant to be evaporated in the indoor heat exchanger (7). Thus, cooling capability is improved.

As will be seen from a Mollier diagram of FIG. 4, the two-stage compression is employed in the present embodiment, and therefore a discharge temperature of refrigerant is lower than that in a single-stage compression refrigeration cycle shown by a virtual line.

Next, a compression operation of the compressor (10) will be described.

When rotating the drive shaft (33) by driving the electric motor (30), the swing pistons (28) of the lower-stage compression mechanism (20L) and the higher-stage compression mechanism (20H) swing and orbit about the center of the bush hole (21c) as the pivot point. Low-pressure gaseous refrigerant returning from the accumulator (8) in the refrigerant circuit (2) flows into the cylinder chamber (25) through the suction path (21a) of the lower-stage compression mechanism (20L), and is compressed by the swing of the swing piston (28).

Meanwhile, intermediate-pressure refrigerant is supplied from the gas-liquid separator (6) to the middle path (20M), and therefore the discharge valve of the lower-stage compression mechanism (20L) is opened when the pressure of refrigerant in the cylinder chamber (25) reaches an intermediate pressure level. Refrigerant discharged from the lower-stage compression mechanism (20L) passes from the discharge path (24a) through the lower muffler (26), and flows into the suction path (21b) of the higher-stage compression mechanism (20H) through the middle path (20M). Such refrigerant joins intermediate-pressure refrigerant of the injection pipe (2A) at the middle path (20M), and flows into the cylinder chamber (25) of the higher-stage compression mechanism (20H).

In the higher-stage compression mechanism (20H), intermediate-pressure refrigerant is compressed, and high-pressure refrigerant is discharged into the casing (11). The high-pressure refrigerant passes between the stator (31) and the rotor (32) of the electric motor (30), and is discharged to the refrigerant circuit (2). The high-pressure refrigerant circulates in the refrigerant circuit (2) as described above.

In such a state, if a rolling piston type compressor is used as the compressor, an outer circumferential surface of a rolling piston and a tip end surface of a blade slide against each other to generate heat, and therefore an inside of a compressor is likely to have a high temperature. Thus, there is a possibility that, when using the refrigerant containing the compound represented by the molecular formula of C₃HₘFₙ, such as the HFO-1234yf refrigerant, the refrigerant is decomposed. However, in the present embodiment, the swing piston type compressor is used considering refrigerant which are likely to be decomposed at high temperature. Thus, the piston and the blade do not slide against each other, thereby not generating heat in such a section. Consequently, refrigerant is less susceptible to heat.

### Advantages of First Embodiment

In the present embodiment, as the refrigerant of the refrigerant circuit (2), the single component refrigerant containing the HFO-1234yf (2, 3, 3, 3-tetrafluoro-1-propene) is used. The HFO-1234yf has properties such as a relatively-high theoretical COP. Thus, the single component refrigerant of such refrigerant is used, thereby performing a refrigerant cycle with excellent operational efficiency. Consequently, operational efficiency of the refrigeration apparatus (1) can be improved.

In addition, the HFO-1234yf has properties such as relatively-low global warming potential (GWP). Thus, the single component refrigerant of such refrigerant is used as the refrigerant, thereby providing the environment-friendly refrigeration apparatus (1).

In the present embodiment, the two-stage compressor including the lower-stage compression mechanism (20L) and the higher-stage compression mechanism (20H) is used, resulting in the lower discharge temperature of refrigerant than that of a single-stage single-cylinder compressor. Thus, even in the HFO-1234yf refrigerant which is likely to be decomposed at high temperature, the decomposition of refrigerant is not caused.

In the present embodiment, the swing piston type compressor (10) is used, thereby not causing the sliding of the outer circumferential surface of the piston and the tip end surface of the blade, which is caused in the rolling piston type compressor. Thus, heat due to the sliding of such members is not generated, thereby not causing the decomposition of refrigerant even in the HFO-1234yf refrigerant which is likely to be decomposed at high temperature.

The HFO-1234yf is refrigerant suitable for using under low-pressure condition, and a sufficient circulating amount thereof is hard to be ensured. Thus, considering sufficient refrigeration capability which is hard to be ensured, intermediate-pressure gaseous refrigerant is injected into the compressor (10) in the present embodiment. Consequently, an apparent operational capacity increases to increase the refrigerant circulating amount, thereby enhancing the refrigeration capability even with the HFO-1234yf with which the sufficient refrigeration capability is hard to be ensured.

In the present embodiment, the inverter control is performed, and therefore an increase in rotational speed results in an increase in suction amount. Thus, such configuration also increases the operational capacity to increase the refrigerant circulating amount, thereby enhancing the refrigeration capability even with the HFO-1234yf with which the sufficient refrigeration capability is hard to be ensured.

### Variation of First Embodiment

In the first embodiment, a system is employed, in which intermediate-pressure gaseous refrigerant is injected to the compressor (10) in the two-stage compression refrigeration cycle.

As is apparent from the Mollier diagram of FIG. 4, the two-compression refrigeration cycle is the system in which, after low-pressure refrigerant gas is compressed to an intermediate pressure level in the lower-stage compression mechanism (20L), the intermediate-pressure gaseous refrigerant is cooled to a temperature near a saturated vapor temperature, and then such refrigerant is further compressed in the higher-stage compression mechanism (20H). In the first embodiment, the gas injection system is employed, in which the gas-liquid separator (6) is used as an intermediate cooler (intermediate cooling unit) for cooling intermediate-pressure gaseous refrigerant. However, as the intermediate cooler, other systems including units such as a refrigerant heat exchanger for exchanging heat between high-pressure liquid refrigerant and two-phase refrigerant made by reducing the pressure of the high-pressure liquid refrigerant to an intermediate pressure level may be used.

### <<Second Embodiment of the Invention>>

Next, a second embodiment of the present invention will be described.

In the second embodiment, not a two-stage compressor but a two-cylinder compressor (10) is used as a compressor for performing a compression phase of a refrigeration cycle.

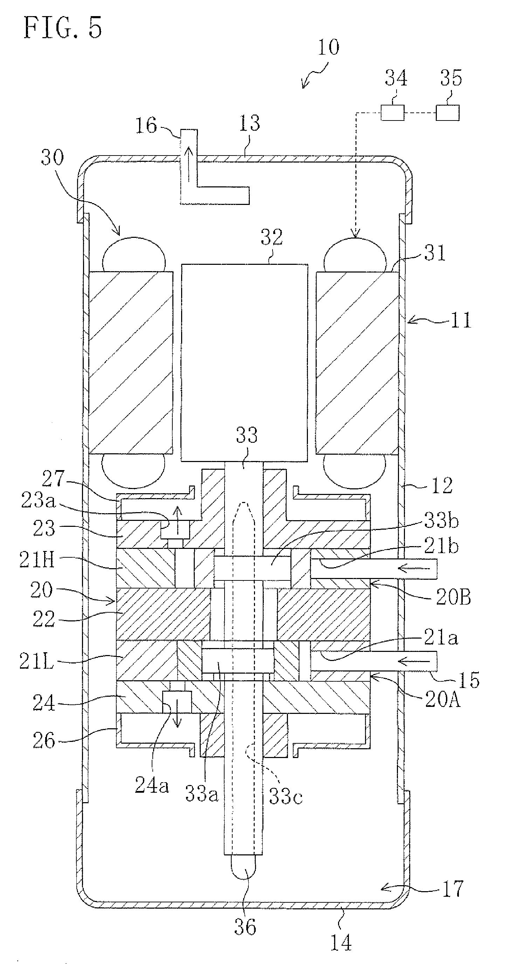

As illustrated in FIG. 5, in the compressor of the second embodiment, a first compression mechanism (20A) and a second compression mechanism (20B) are two compression mechanisms which are not on lower and higher stages, but are in a parallel relationship. A suction path (21a, 21b) is provided in each of the compression mechanisms (20A, 20B), and the suction paths (21a, 21b) are connected to a suction-side refrigerant pipe (2B) of a refrigerant circuit (2) in parallel. In the first embodiment, the first compression mechanism (20A) and the second compression mechanism (20B) are on the lower and higher stages, and both of the compression mechanisms (20A, 20B) are connected together by the middle path (20M). However, such configuration is not employed in the second embodiment.

A lower muffler (26) fixed to a lower plate (24) opens to an internal space of a casing (11), and refrigerant discharged from the first compression mechanism (20A) and the second compression mechanism (20B) is separately discharged into the casing (11).

In the present embodiment, the configuration is not employed, in which intermediate-pressure gaseous refrigerant is injected to the compression mechanisms.

As for other configurations, the second embodiment has the same configurations as those of the first embodiment. An operation is the same as that of the first embodiment, except that the two-stage compression is not performed.

### Advantages of Second Embodiment

In the second embodiment, the single-stage two-cylinder compressor (10) is used. In the single-stage two-cylinder compressor, the volume of each cylinder can be reduced as compared to that of the single-stage single-cylinder compressor. Thus, over-compression in each cylinder can be reduced, thereby decreasing a discharge flow rate. This reduces an increase in refrigerant temperature, thereby reducing or preventing decomposition of refrigerant.

As for other advantages, the second embodiment has the same advantages as those of the first embodiment.

### <<Other Embodiments>>

The foregoing embodiments may have the following configurations.

In the foregoing embodiments, e.g., the compressor including the swing piston type compression mechanisms (20A, 20B) is used. However, it is not limited to the swing piston type compression mechanism, and a rolling piston type or scroll type compression mechanism may be used. In such a case, a two-cylinder or two-stage compression mechanism (20A, 20B) is employed, thereby reducing or preventing an increase in discharge temperature of refrigerant. Consequently, decomposition of HFO-1234yf which is refrigerant can be reduced or prevented.

In the foregoing embodiment, as the refrigerant of the refrigerant circuit (10), single component refrigerant of the refrigerant represented by the molecular formula: C₃HₘFₙ (note that m = 1-5, n = 1-5, and m + n = 6) and having the single double bond in the molecular structure, other than the HFO-1234yf may be used. Specifically, the single component refrigerant includes, e.g., 1, 2, 3, 3, 3-pentafluaro-1-propene (referred to as "HFO-1225ye," and a chemical formula thereof is represented by an expression CF₃ - CF = CHF); 1, 3, 3, 3-tetrafluoro-1-propene (referred to as "HFO-1234ze," and a chemical formula thereof is represented by an expression CF₃ - CH = CHF); 1, 2, 3, 3-tetrafluoro-1-propene (referred to as "HFO-1234ye," and a chemical formula thereof is represented by an expression CHF₂ - CF = CHF); 3, 3, 3-trifluoro-1-propene (referred to as "HFO-1243zf," and a chemical formula thereof is represented by an expression CF₃ - CH = CH₂); 1, 2, 2-trifluoro-1-prapene (a chemical formula thereof is represented by an expression CH₃ - CF = CF₂); and 2-fluoro-1-propene (a chemical formula thereof is represented by an expression CH₃ - CF = CH₂).

In the foregoing embodiments, refrigerant mixture may be used, which is made by adding at least one of HFC-32 (difluoromethane), HFC-125 (pentafluoroethane), HFC-134 (1, 1, 2, 2-tetrafluoroethane), HFC-134a (1, 1, 1, 2-tetrafluoroethane), HFC-143a (1, 1, 1-trifluoroethane), HFC-152a (1, 1-difluoroethane), HFC-161, HFC-227ea, HFC-236ea, HFC-236fa, HFC-365mfc, methane, ethane, propane, propene, butane, isobutane, pentane, 2-methylbutane, cyclopentane, dimethyl ether, bis-trifluoromethyl-sulfide, carbon dioxide, and helium; to the refrigerant represented by the molecular formula and having the single double bond in the molecular structure (1, 2, 3, 3, 3-pentafluoro-1-propene; 2, 3, 3, 3-tetrafluoro-t-propene; 1, 3, 3, 3-tetrafluaro-1-prnpene; 1, 2, 3, 3-tetrafluoro-1-propene; 3, 3, 3-trifluaro-1-propene; 1, 2, 2-trifluoro-1-propene; and 2-fluaro-1-propene).

Refrigerant mixture of, e.g., the HFO-1234yf and the HFC-32 may be used. In such a case, the refrigerant mixture may be used, in which the proportion of the HFO-1234yf is 78.2% by mass, and the proportion of the HFC-32 is 21.8% by mass. In addition, the refrigerant mixture may be used, in which the proportion of the HFO-1234yf is 77.6% by mass, and the proportion of the HFC-32 is 22.4% by mass. In the refrigerant mixture of the HFO-1234yf and the HFC-32, the proportion of the HFO-1234yf may be equal to or greater than 70% by mass and equal to or less than 94% by mass, and the proportion of the HFC-32 may be equal to or greater than 6% by mass and equal to or less than 30% by mass. The proportion of the HFO-1234yf is preferably equal to or greater than 77% by mass and equal to or less than 87% by mass, and the proportion of the HFC-32 may be equal to or greater than 13% by mass and equal to or less than 23% by mass. More preferably, the proportion of the HFC-1234yf is equal to or greater than 77% by mass and equal to or less than 79% by mass, and the proportion of the HFC-32 is equal to or greater than 21% by mass and equal to or less than 23% by mass.

Refrigerant mixture of the HFO-1234yf and the HFC-125 may be used. In such a case, the proportion of the HFC-125 is preferably equal to or greater than 10% by mass, and more preferably equal to or greater than 10% by mass and equal to or less than 20% by mass.

Refrigerant mixture of the HFO-1234yf, the HFC-32, and the HFC-125 may be used. In such a case, refrigerant mixture may be used, which contains the HFO-1234yf of 52% by mass, the HFC-32 of 23% by mass, and the HFC-125 of 25% by mass.

The foregoing embodiments have been set forth merely for purposes of preferred examples in nature, and are not intended to limit the scope, applications, and use of the invention.

### INDUSTRIAL APPLICABILITY

As described above, the present invention is useful for the refrigeration apparatus for which the refrigerant containing the compound represented by the molecular formula of C₃HₘFₙ is used.

## Claims

1. A refrigeration apparatus in which refrigerant of a refrigerant circuit (2) is single component refrigerant containing refrigerant represented by a molecular formula: C₃HₘFₙ where "m" and "n" are integers equal to or greater than 1 and equal to or less than 5, and a relationship represented by an expression m + n = 6 is satisfied, and having a single double bond in a molecular structure, or refrigerant mixture containing the refrigerant, the refrigeration apparatus, comprising:
a compressor (10) for performing a compression phase of refrigerant,
wherein the compressor (10) includes a first compression mechanism (20A) and a second compression mechanism (20B) inside a casing (11).

2. The refrigeration apparatus of claim 1, wherein
the first compression mechanism (20A) of the compressor (10) is a lower-stage compression mechanism (20L), and the second compression mechanism (20B) is a higher-stage compression mechanism (20H); and
both of the compression mechanisms (20A, 20B) serve as a two-stage compression mechanism (20L, 20H) for compressing refrigerant at two stages.

3. The refrigeration apparatus of claim 1, wherein
the compression mechanism (20A, 20B) is a swing piston type compression mechanism which includes a cylinder (21L, 21H) having a cylinder chamber (25), and a swing piston (28) orbiting along an inner circumferential surface of the cylinder (21L, 21H); in which a blade (28b) outwardly protruding in a radial direction is formed in the swing piston (28); and in which support members (29) for holding the blade (28b) so as to move the blade (28b) back and forth are rotatably held by the cylinder (21L, 21H).

4. The refrigeration apparatus of claim 1, wherein
the refrigerant represented by the molecular formula: C₃HₘFₙ where "m" and "n" are the integers equal to or greater than 1 and equal to or less than 5, and the relationship represented by the expression m + n = 6 is satisfied, and having the single double bond in the molecular structure is 2, 3, 3, 3-tetrafluoro-1-propene.

5. The refrigeration apparatus of claim 1, wherein
the refrigerant of the refrigerant circuit (2) is refrigerant mixture further containing difluoromethane.

6. The refrigeration apparatus of claim 1, wherein
the refrigerant of the refrigerant circuit (2) is refrigerant mixture further containing pentafluoroethane.
